(19) Europäisches Patentamt
European Patent Office
Office européen des brevets

(11) **EP 4 467 784 A1**

(12) **EUROPEAN PATENT APPLICATION**

(43) Date of publication:
**27.11.2024 Bulletin 2024/48**

(21) Application number: **23174638.9**

(22) Date of filing: **22.05.2023**

(51) International Patent Classification (IPC):
**F01N 9/00** *(2006.01)*        **F01N 11/00** *(2006.01)*

(52) Cooperative Patent Classification (CPC):
**F01N 9/002; F01N 9/005; F01N 11/002;**
**F01N 11/005;** F01N 2560/06; F01N 2560/08;
F01N 2610/00; F01N 2900/1406

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **VOLVO TRUCK CORPORATION**
**405 08 Göteborg (SE)**

(72) Inventor: **MORENO CRUZ, Jacob Raul**
**524 30 Herrljunga (SE)**

(74) Representative: **Valea AB**
**Box 1098**
**405 23 Göteborg (SE)**

(54) **METHOD FOR DETECTING CLOGGING OF A MIX BOX AND SCR USING EXHAUST MANIFOLD PRESSURE**

(57)     A method for detecting a flow restriction in an exhaust aftertreatment system due to solid deposits formed in a mix box and/or SCR is disclosed. The method comprising having a first pressure sensor positioned downstream an exhaust manifold monitor a first pressure $P_{121}$ of the exhaust gas at an exit of an exhaust manifold, and a second pressure sensor arranged across the diesel particulate filter to monitor a second pressure $\Delta P$ across a diesel particulate filter. If a change in the second pressure $\Delta P$ is changing at substantially same rate as a modelled pressure value $\Delta P_{model}$, no restriction in the exhaust flow due to solid deposits in the mix box and/or SCR is present, but if a change in the second pressure $\Delta P$ is decreasing compared to the change in the modelled pressure value $\Delta P_{model}$, a flow restriction due to deposits in the mix box and/or SCR is present, and a notification signal is generated. An exhaust system, an electronic aftertreatment controller and a vehicle comprising the exhaust system, and electronic aftertreatment controller are also disclosed.

Fig. 1

EP 4 467 784 A1

## Description

### TECHNICAL FIELD

The disclosure relates generally to an exhaust system of a combustion engine and to a vehicle comprising such a system. In particular aspects relates to a method for detecting clogging of a mix box and/or SCR using exhaust manifold pressure and DPF delta pressure signals. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Selective catalytic reduction is a means of converting nitrogen oxides, also referred to as $NO_x$ with the aid of a catalyst and heat into diatomic nitrogen ($N_2$), and water ($H_2O$). A reductant, typically anhydrous ammonia ($NH_3$), aqueous ammonia ($NH_4OH$), or a urea ($CO(NH_2)_2$) solution, is added to a stream of flue or exhaust gas and is reacted onto a Selective Catalytic Reducer (SCR). As the reaction drives toward completion, nitrogen ($N_2$), and carbon dioxide ($CO_2$), in the case of urea use, are produced).

The selective catalytic reduction technique is considered to be the most efficient way for NOx reduction in diesel engines of e.g., heavy trucks, ships, locomotives gas turbines and automobiles. However, selective catalytic reduction is an effective technique at high temperatures, since NOx formation rises exponentially with increasing temperatures.

Since ammonia is a gas difficult to move or store, it is highly corrosive, and prone to leakage, a urea-selective catalytic reduction technology has been developed based on the ammonia selective reduction of NOx ($NH_3$-SCR) technology. Urea is characterized by non-toxic, clean, odorless, non-flammable, no explosion danger and low corrosive abilities.

Many conventional systems utilize Diesel Exhaust Fluid (DEF), which typically is a urea-water solution. To convert the DEF into $NH_3$, the DEF is injected into a decomposition tube or mix box through which an exhaust stream flows. The injected DEF spray is heated by the exhaust gas stream to vaporize the urea-water solution and trigger the decomposition of urea into $NH_3$. The exhaust gas mixture, including the $NH_3$ decomposed from the urea, further mixes while flowing through the decomposition tube and passes over the SCR catalyst, where the $NO_x$ and $NH_3$ are converted primarily to $N_2$ and $H_2O$.

However, if the temperatures are not high enough for conversion of urea to $NH_3$, or if more urea is released into the exhaust stream than required, there may be a possibility of build-up of solids in the exhaust pipes and near the spray modules of the mix box and/or SCR. Due to this build-up, the flow of exhaust through the exhaust aftertreatment system is restricted and there may arise problems like increase in backpressure, release of ammonia into the atmosphere, raised levels of NOx output and increased fuel consumption etc. Therefore, to reduce the risk of inefficiency in the conversion of NOx to nitrogen (and further negative drawbacks), any buildup of solids or clogging of the mix box and/or SCR must be detected and remedied as early as possible.

### SUMMARY

According to a first aspect of the disclosure there is provided a method for detecting a flow restriction in an exhaust system due to solid deposits formed in a portion of an exhaust flow path, wherein the portion of exhaust flow path comprises at least a mix box - selective catalytic reducer of the exhaust system. The exhaust system comprises an exhaust aftertreatment system being located downstream of a combustion engine in an exhaust flow path. The exhaust aftertreatment system comprises

- a diesel oxidation catalyst receiving exhaust gas from the combustion engine; and
- a diesel particulate filter positioned downstream of the diesel oxidation catalyst; and
- a mix box-selective catalytic reducer positioned downstream of the diesel particulate filter in the exhaust flow path; and
- a first pressure sensor positioned downstream an exit of a exhaust manifold in the combustion engine configured to monitor a first pressure $P_{121}$ of the exhaust gas at the exit of the exhaust manifold; and
- a second pressure sensor arranged across the diesel particulate filter configured to monitor a second pressure $\Delta P$ across the diesel particulate filter.

The method comprises

- the first pressure sensor monitoring a first pressure of the exhaust gas at the exit of the exhaust manifold generating a first pressure value $P_{121}$; and

- the second pressure sensor monitoring a second pressure across the diesel particulate filter generating a second pressure value $\Delta P$;

- using a modelled pressure value $\Delta P_{model}$ to estimate an expected second pressure $\Delta P$ across the diesel particulate filter at unrestricted exhaust flow conditions, the modelled pressure value $\Delta P_{model}$ being modelled with respect to the first pressure value $P_{121}$, an exhaust mass flow $m$, a first and a second temperature $T_{124a}$, $T_{124}$, an estimated restriction load and a normal flow resistance across the selective catalytic reducer;

- computing an estimated flow coefficient $K_{mix\_box}$ for the exhaust flow through the mix box - selective catalytic reducer when the second pressure value $\Delta P$ across the diesel particulate filter during operation starts deviating from the modelled pressure value $\Delta P_{model}$ and provide an approximate flow restriction in the mix box and/or selective catalytic reducer;

- if a change in the second pressure $\Delta P$ monitored by the second pressure sensor is changing at substantially same rate as the modelled pressure value $\Delta P_{model}$, no restriction in the exhaust flow due to solid deposits in the mix box and/or selective catalytic reducer is present; and

- if a change in the second pressure $\Delta P$ monitored by the second sensor is decreasing compared to the change in the modelled pressure value $\Delta P_{model}$, a flow restriction due to deposits in the mix box and/or selective catalytic reducer is present; and a notification signal is generated.

The first aspect of the disclosure may seek to detect a restriction of the flow through the exhaust flow path due to clogging of a mix box and/or selective catalyst reducer located downstream of a diesel particulate filter. A technical benefit may include that the method is capable of differentiating between a restriction of the flow due to clogging of the mix box and/or selective catalyst reducer and a build-up of soot in the diesel particulate filter. In the case of soot/ash inside the diesel particulate filter, both diesel particulate filter second pressure sensor and its model value based on exhaust pressure sensor will increase.

In some examples the second pressure sensor is a differential pressure sensor comprising

- a first sensor part positioned at the entrance of the diesel particulate filter which is configured to measure the pressure $P_{122a}$ of the exhaust gas entering the diesel particulate filter; and

- a second sensor part positioned at an exit of the diesel particulate filter which is configured to measure the pressure $P_{122b}$ of the exhaust gas exiting the diesel particulate filter, the second pressure sensor outputs a second pressure $\Delta P$ across the diesel particulate filter wherein $\Delta P = P_{122a} - P_{122b}$. A technical benefit of the second sensor being a differential sensor may include that an increase in the pressure $P_{122b}$ measured by the second sensor part positioned at the exit of the diesel particulate filter compared to the pressure $P_{122a}$ measured by the first sensor part positioned at the entrance of the diesel particulate filter indicates a restriction of the exhaust flow occurring downstream of the diesel particulate filter. This will generate a decreasing delta pressure output $\Delta P$ by the second sensor as the restriction of the exhaust flow increases.

If the delta pressure $\Delta P$ measured by the second sensor is continuously decreasing compared to the pressure $P_{121}$ measured by the first pressure sensor, it indicates that the restriction in the exhaust flow is caused by a deposition of solids in the mix box and/or selective catalyst reducer.

In some examples the flow coefficient $K_{mix\ box}$ is proportional to a cross-sectional area in the mix box, indicating an amount of built-up solids inside the mix box. The technical benefit of computing the flow coefficient through the mix box is that it will give an estimation of the actual build-up of solids inside the mix-box and/or selective catalyst reducer.

In some examples the exhaust system further comprises an ammonia slip catalyst arranged downstream of the selective catalytic reducer, said ammonia slip catalyst is configured to oxidize ammonia to nitrogen gas and water. The technical benefit of providing an ammonia slip catalyst may be that any ammonia not consumed by the selective catalyst reducer will be oxidized by the ammonia slip catalyst to harmless nitrogen gas and water, thereby avoiding smell and health risks.

In some examples the exhaust system further comprises an aftertreatment hydrocarbon injector configured to inject hydrocarbons into the exhaust flow path upstream of the diesel oxidation catalyst. The technical benefit of providing an aftertreatment hydrocarbon injector may be that the injected hydrocarbons will raise the temperature of the exhaust gas flow which in turn will induce a regeneration of the diesel particulate filter to burn off soot that may have accumulated inside the diesel particulate filter.

In some examples the exhaust system further comprises a urea dosing system configured to inject diesel exhaust fluid into the exhaust flow path upstream of the selective catalytic reducer. The technical benefit may be that the urea dosing system takes dosing input from an aftertreatment control module to control the input frequency and amount of diesel exhaust fluid according to the demand. The diesel exhaust fluid solution is pumped into the dosing module of the urea dosing system with the help of a pumping unit and from a diesel exhaust fluid solution holding tank.

In some examples the urea dosing system is configured to inject diesel exhaust fluid into a mix-box arranged upstream of the selective catalytic reducer. The technical benefit may be that the mix box has an advantageous interior design to induce turbulence in the exhaust gas flow entering the mixing chamber thereby enhancing mixing of the exhaust gas with the reducing agent diesel exhaust fluid before it enters the selective catalyst reducer.

According to a second aspect of the disclosure an exhaust system for treating exhaust gas of a combustion engine is disclosed. The exhaust system comprises an exhaust aftertreatment system being located downstream of a combustion engine in an exhaust flow path, the exhaust aftertreatment system comprising

- a diesel oxidation catalyst receiving exhaust gas from the combustion engine; and
- a diesel particulate filter positioned downstream of the diesel oxidation catalyst in the exhaust flow path; and
- a selective catalytic reducer positioned downstream of the diesel particulate filter in the exhaust flow path; and
- a first pressure sensor positioned at an exit of an exhaust manifold from the combustion engine configured to monitor a first pressure value $P_{121}$ of the exhaust gas at the exit of the exhaust manifold; and
- a second pressure sensor configured to monitor a second pressure $\Delta P$ across the diesel particulate filter. The second aspect of the disclosure may seek to provide an exhaust system that is capable of detecting a clogging of a mix box and/or selective catalyst reducer due to build-up of solid deposits. A technical benefit may include that due to the set-up with a differential sensor measuring a delta pressure across the diesel particulate filter, the exhaust system is capable of differentiating between a restriction of the flow due to clogging of the mix box and/or selective catalyst reducer and a build-up of soot in the diesel particulate filter.

In some examples the second pressure sensor comprises

- a first sensor part positioned at the entrance of the diesel particulate filter which is configured to measure a pressure $P_{122a}$ of the exhaust gas entering the diesel particulate filter; and
- a second sensor part positioned at an exit of the diesel particulate filter which is configured to measure a pressure $P_{122b}$ of the exhaust gas exiting the diesel particulate filter, the second pressure sensor outputs a delta pressure $\Delta P$ across the diesel particulate filter wherein $\Delta P = P_{122a} - P_{122b}$. A technical benefit the second sensor being a differential sensor may include that an increase in the pressure $P_{122b}$ measured by the second sensor part positioned at the exit of the diesel particulate filter compared to the pressure $P_{122a}$ measured by the first sensor part positioned at the entrance of the diesel particulate filter indicates a restriction of the exhaust flow occurring downstream of the diesel particulate filter. This will generate a decreasing second pressure output $\Delta P$ by the second sensor.

In some examples the exhaust system further comprises an ammonia slip catalyst arranged downstream of the selective catalytic reducer and configured to oxidize ammonia to nitrogen gas and water. The technical benefit of providing an ammonia slip catalyst may be that any ammonia not consumed by the selective catalyst reducer will be oxidized by the ammonia slip catalyst to harmless nitrogen gas and water, thereby avoiding smell and health risks.

In some examples the exhaust system further comprises an aftertreatment hydrocarbon injector configured to inject hydrocarbons into the exhaust flow path upstream of the diesel oxidation catalyst. The technical benefit of providing an aftertreatment hydrocarbon injector may be that the injected hydrocarbons will raise the temperature of the exhaust gas flow which in turn will induce a regeneration of the diesel particulate filter to burn off soot that may have accumulated inside the diesel particulate filter.

In some examples the exhaust system further comprises a urea dosing system configured for injecting diesel exhaust fluid into the exhaust flow path upstream of the selective catalytic reducer. The technical benefit may be that the urea dosing system takes dosing input from an aftertreatment control module to control the input frequency and amount of diesel exhaust fluid according to the demand. The diesel exhaust fluid solution is pumped into the dosing module of the urea dosing system with the help of a pumping unit and from a diesel exhaust fluid solution holding tank.

In some examples the urea dosing system is configured to inject diesel exhaust fluid into a mix-box arranged upstream of the selective catalytic reducer. The technical benefit may be that the mix box has an advantageous interior design to induce turbulence in the exhaust gas flow entering the mixing chamber thereby enhancing mixing of the exhaust gas with the injected diesel exhaust fluid before it enters the selective catalyst reducer.

According to a third aspect of the invention an electronic aftertreatment controller configured to detect a flow restriction in an exhaust system due to solid deposits formed in a portion of an exhaust flow path, the portion of exhaust flow path comprising at least a mix box - selective catalytic reducer of the exhaust system is provided. The electronic aftertreatment controller comprising

- microprocessor;

- a memory;

the exhaust system comprising an exhaust aftertreatment system being located downstream of a combustion engine in the exhaust flow path, the exhaust aftertreatment system comprising

- a diesel oxidation catalyst receiving exhaust gas from the combustion engine; and
- a diesel particulate filter positioned downstream of the diesel oxidation catalyst; and
- a selective catalytic reducer positioned downstream of the diesel particulate filter in the exhaust flow path; and
- a first pressure sensor positioned downstream an exit of a exhaust manifold in the combustion engine configured to monitor a first pressure $P_{121}$ of the exhaust gas at the exit of the exhaust manifold; and
- a second pressure sensor arranged across the diesel particulate filter configured to monitor a second pressure $\Delta P$ across the diesel particulate filter;

characterized in that the controller is configured to;

- receive a first pressure value $P_{121}$ from the first pressure sensor monitoring a first pressure of the exhaust gas at the exit of the exhaust manifold; and
- provide a second pressure value $\Delta P$ from the second pressure sensor monitoring a second pressure across the diesel particulate filter; and
- generate a modelled pressure value $\Delta P_{model}$ to estimate an expected second pressure $\Delta P$ across the diesel particulate filter at unclogged condition, the modelled pressure value $\Delta P_{model}$ being modelled with respect to the first pressure value $P_{121}$, an exhaust mass flow $m$, a first and a second temperature $T_{124a}$, $T_{124c}$, an estimated restriction load and a normal flow resistance across the selective catalytic reducer; and
- compute an estimated flow coefficient $K_{mix\_box}$ when the second pressure value $\Delta P$ across the diesel particulate filter during operation starts deviating from the modelled pressure value $\Delta P_{model}$ through the mix box and/or selective catalytic reducer and provide an approximate restriction in the mix box and/or selective catalytic reducer;
- monitor if a change in the second pressure $\Delta P$ monitored by the second pressure sensor is changing at substantially same rate as the modelled pressure value $\Delta P_{model}$, no restriction in the flow due to deposits in the mix box and/or selective catalytic reducer is present;
- monitor if a change in the second pressure $\Delta P$ monitored by the second sensor is decreasing compared to a change in the modelled pressure value $\Delta P_{model}$, a flow restriction due to deposits in the mix box and/or selective catalytic reducer is present; and generate a notification signal.

According to a fourth aspect of the disclosure a vehicle comprising the exhaust system as described above is disclosed.
The above aspects, accompanying claims, and/or examples disclosed herein above and later below may be suitably combined with each other as would be apparent to anyone of ordinary skill in the art.
Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

**BRIEF DESCRIPTION OF THE DRAWINGS**

With reference to the appended drawings, below follows a more detailed description of aspects of the disclosure cited as examples.

**FIG. 1** is an exemplary vehicle comprising an internal combustion engine for propulsion of the vehicle 1, and an exhaust aftertreatment system (EATS) as described herein.
**Fig. 2** is a schematic diagram illustrating an engine 101 and an exhaust aftertreatment system included in the vehicle.
**Fig. 3** illustrates two sections "Engine" and "mix box" of the EATS as simplified by the mathematical equation.
**Fig. 4a** illustrates a graph of modelled pressure $\Delta P_{model}$ together with actual second pressure $\Delta P$ measured by the second sensor during operation of an engine at unclogged conditions.
**Fig. 4b** discloses a scatter plot of second pressure values $\Delta P$ measured by the second sensor during operation of an engine at unclogged conditions.
**Fig. 5a** illustrates a graph of modelled pressure value $\Delta P_{model}$ together with the actual second pressure $\Delta P$ measured by the second sensor during operation of an engine with a build-up of solids in the mix box and/or selective catalytic reducer.
**Fig. 5b** discloses a scatter plot of second pressure values $\Delta P$ measured by the second sensor during operation of an engine with a build-up of solids in the mix box and/or selective catalytic reducer.

**DETAILED DESCRIPTION**

Aspects set forth below represent the necessary information to enable those skilled in the art to practice the disclosure.

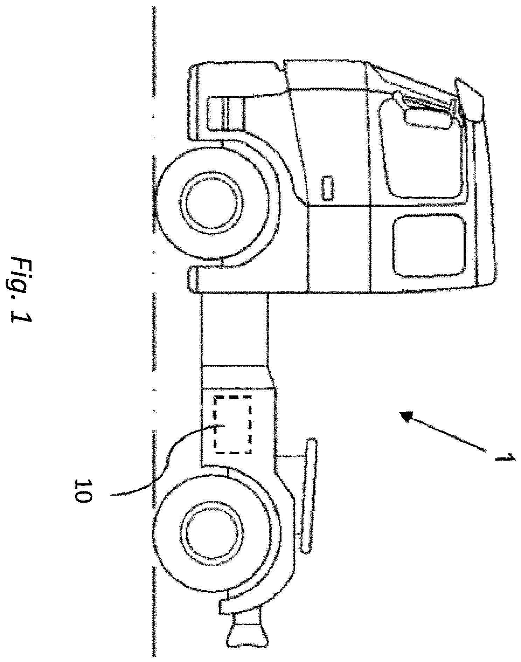

A vehicle 1 in the form of a truck is schematically shown in fig. 1. The vehicle 1 includes an internal combustion engine 101 for propulsion of the vehicle 1, and an exhaust aftertreatment system (EATS) 100 for guiding and handling exhaust gases generated by the internal combustion engine 101.

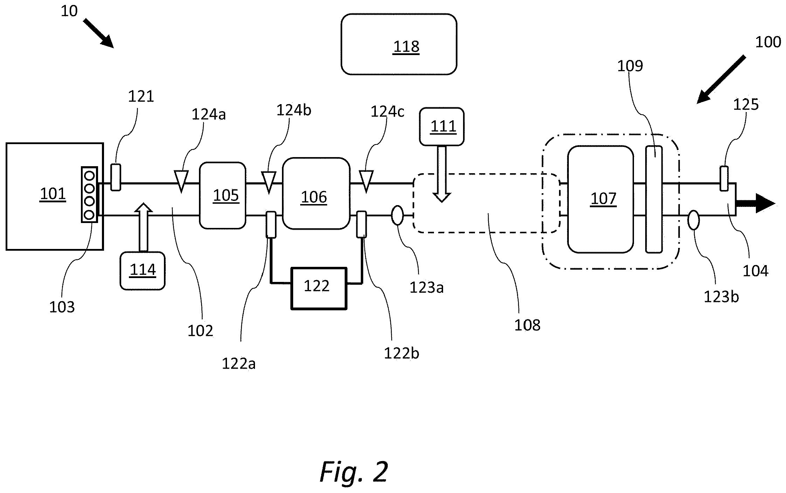

FIG. 2 is a schematic diagram illustrating an engine 101 and an exhaust aftertreatment system 100 included in the vehicle 1 of Fig. 1. Generally, the exhaust aftertreatment system 100 is configured to remove regulated pollutants present in the exhaust gas. The exhaust flow path 102 of the exhaust aftertreatment system 100 extends from the engine 101 via the exhaust manifold 103 to an exhaust aftertreatment system 100, through a tailpipe 104 provided downstream of the exhaust aftertreatment system 100, via which exhaust is emitted.

As illustrated in FIG. 2, the exhaust aftertreatment system 100, located within the exhaust flow path 102, comprises at least three components 105, 106, 107 for treatment of exhaust gases. In the shown embodiment, the components 105, 106, 107 are a Diesel Oxidation Catalyst (DOC) 105, a Diesel Particulate Filter (DPF) 106, and a Selective Catalytic Reducer (SCR) 107, respectively. Each of the DOC 105, SCR 107, and DPF 106 components are configured to perform a particular exhaust emissions treatment operation on the exhaust gas passing through or over the respective components.

The exhaust aftertreatment system 100 may also include an Aftertreatment Hydrocarbon Injector (AHI) 114 configured to inject hydrocarbons into the exhaust flow path 102 upstream of the DOC 105. The injected hydrocarbons oxidize over the DOC 105 to raise the temperature of the exhaust gas passing therethrough. The temperature of the exhaust gas is advantageously periodically raised even further in order to induce active regeneration of the DPF 106 to burn off soot and other particulate matter that have accumulated inside the DPF 106.

Ammonia, in the presence of oxygen and a catalyst, reduces nitrogen oxide NO and nitrogen dioxide $NO_2$ present in engine exhaust gas to nitrogen gas $N_2$ and water. However, since ammonia is highly volatile in nature and exists in gaseous state at standard temperature and pressure, urea which clear, non-toxic and safe to handle is used instead. 135°C

A Urea Dosing System (UDS) 111 may also be provided upstream of the SCR 107 for injecting diesel exhaust fluid (DEF) upstream of the SCR 107. DEF also known as AUS 32 and marketed as AdBlue, is a liquid used to reduce the amount of air pollution created by a diesel engine 101. Specifically, AdBlue is an aqueous urea solution made with 32.5% urea and 67.5% deionized water. When it is injected into the hot exhaust gas stream, the water evaporates, and the urea thermally decomposes to form ammonia ($NH_3$) and isocyanic acid (HNCO):

$$(NH_2)_2CO \rightarrow NH_3 + HNCO$$

The isocyanic acid reacts with the water vapor and hydrolyses to carbon dioxide and ammonia:

$$HNCO + H_2O \rightarrow CO_2 + NH_3$$

With the overall reaction being:

$$(NH_2)_2CO + H_2O \rightarrow 2\ NH_3 + CO_2$$

Advantageously the UDS 111 injects DEF into a mix box 108 located upstream of the SCR 107. The mix box 108 comprises an inlet pipe, through which exhaust gas enters a mixing chamber. After being mixed with DEF, the exhaust gas leaves the mixing chamber through an outlet pipe connected to the SCR 107. The inlet and outlet pipes form an angle, preferably at least 90°. The mixing chamber comprises an opening, adapted to receive a nozzle by means of which the DEF can be introduced into the mixing chamber. The mix box 108 advantageously has an interior design to induce turbulence in the exhaust gas flow entering the mixing chamber thereby enhancing mixing of the exhaust gas with the reducing agent DEF before it enters the SCR 107.

The reaction between NOx and $NH_3$ is never perfect. Although it can achieve efficiency rates often higher than 95%, there is a waste stream of un-reacted $NH_3$ that goes into the atmosphere. This may occur when ammonia is injected in excess, temperatures are too low for ammonia to react, or the catalyst has been poisoned. This excess $NH_3$ is known as Ammonia Slip. Gaseous ammonia has a very low smell threshold of approx. 15 ppm causing unpleasant odors and also leads to irritation of eyes and the respiratory system of a human being. Therefore, the exhaust aftertreatment system 100 advantageously also includes an ammonia slip catalyst 109 arranged downstream of the SCR 107. The task of the ammonia slip catalyst 109 is the selective oxidation of the ammonia slip ($NH_3$) to harmless nitrogen gas ($N_2$) and water ($H_2O$) and therefore avoiding smell and health risks.

Generally, during operation of an exhaust after treatment system, the exhaust leaves the diesel engine 101 and enters the DOC 105 wherein the amount of carbon monoxide (CO) and hydrocarbons (HCs) present in the exhaust gas are reduced via oxidation techniques. It also converts NO to $NO_2$ for passive regeneration of soot on a DPF 106 and to facilitate fast SCR reactions. Thereafter the exhaust enters the DPF 106 which filters and traps particulate matter, including soot, present in the exhaust gas. Finally, the exhaust continues through the SCR 107 and ammonia slip catalyst 109 wherein $NO_x$ emissions are reduced.

The exhaust aftertreatment system 100 further includes various sensor devices which are in operative communication with an electronic aftertreatment controller (EAC) 118. The exhaust aftertreatment system 100 is throughout the exhaust flow provided with pressure sensors, temperature sensors and NOx sensors that will confirm and regulate proper operation of each of the components in the exhaust aftertreatment system 100. The EAC 118 may e.g., be configured to control active regeneration of the DPF 106 and injection of DEF for the SCR 107 reactions.

Communication between and among the components may be handled via any number of wired or wireless connections. For example, a wired connection may include a serial cable, a fiber optic cable, a CATS cable, or any other form of wired connection. A wireless connection may include the Internet, Wi-Fi, cellular, radio, etc. In one embodiment, a controller area network ("CAN") bus provides the exchange of signals, information, and/or data.

A number of temperature sensors 124a, 124b, 124c are located along the exhaust flow path 102 with a first temperature sensor 124a located upstream of the DOC 105, a second temperature sensor 124b located at the entrance of the DPF 106, and a third temperature sensor 124c located at the exit of the DPF 106. The temperature sensors 124 regulate, for example urea dosing and regeneration of the DPF 106.

When leaving the engine 101, the engine exhaust gas which has high NOx concentrations is diverted into the exhaust gas flow 102 where there is an upstream NOx sensor 123a either mounted on the engine 101 or at the entrance of the exhaust aftertreatment system 100. The upstream NOx sensor 123a communicates with the EAC 118 regarding the total content of NOx in the exhaust gas flow leaving the engine. The UDS 111 which is connected to the mix box 108 located upstream of the SCR 107 takes dosing input from the EAC 118 thus, enabling control of the input frequency of DEF according to the demand. The DEF solution is pumped into the dosing module of the UDS 111 with the help of a pumping unit (not shown) and from a DEF solution holding tank (not shown).

After the DEF has been injected into the mix box and the exhaust-DEF mix has proceeded into the SCR, catalyzed reactions occur between the exhaust and ammonia generated from urea decomposition as follows:

$$4\ NO + 4\ NH_3 + O_2\ 4\ N_2 + 6\ H_2O\ (\text{"standard SCR"})$$

and

$$6\ NO_2 + 8\ NH_3 \rightarrow 7\ N_2 + 12\ H_2O\ (\text{"}NO_2\ SCR\ \text{selective catalytic reduction"})$$

$$NO + NO_2 + 2\ NH_3 \rightarrow 2\ N_2 + 3\ H_2O\ (\text{"fast SCR"})$$

The overall reduction of $NO_x$ by urea is then:

$$2\ (NH_2)_2CO + 4\ NO + O_2 \rightarrow 4\ N_2 + 4\ H_2O + 2\ CO_2$$

and

$$4\ (NH_2)_2CO + 6\ NO_2 \rightarrow 7\ N_2 + 8\ H_2O + 4\ CO_2$$

and

$$(NH_2)_2CO + NO + NO_2 \rightarrow 2\ N_2 + 2\ H_2O + CO_2$$

The ratio between $NO_2$ and NO determines which reactions take place and how fast. The highest conversion rates are achieved if equal amounts of $NO_2$ and NO are present, especially at temperatures between 200°C and 350°C. If there is more NO than $NO_2$, fast SCR and standard SCR take place sequentially. If there is more $NO_2$ than NO, fast SCR and $NO_2$ SCR take place sequentially,

The fumes pass through a downstream $NO_x$ sensor 123b present after the SCR 107 which analyses any $NO_x$ still present, and if any, adjusts the feed of DEF from the control module.

A significant amount of energy is required for these reactions to occur, the source for this energy is only provided by the heat exchange from the exhaust gas and the wall surface of exhaust flow path 102. The heat exchange from the pipe wall to the DEF can cause a significant cooling of the pipe wall. Cooling of several hundred degrees might occur especially if the DEF hits a small spot on the pipe wall for a long time which are commonly called as cold spots which may lead to incomplete decomposition of urea leaving non-hydrolyzed isocyanic acid (HCNO) in the system.

Any coagulation of the isocyanate (HCNO) formed in the above mentioned thermolysis reactions can create solid deposits that will restrict the flow of exhaust through the mix box and the SCR which needs a temperature above 350 °C to melt. The solid deposits may be a mixture of isocyanic acid, biuret, triuret, cyanuric acid and ammelide. The cold spots mentioned above could be a perfect place to create temperature variation and thus leading to deposition of solids. Clogging due to a build-up of solids may also occur if ADBlue is not used, or if it is diluted with not absolutely pure water. The clogging sediments progressively accumulate, creating issues of backpressure and material deteriorations. In addition, deposits as a waste of reagents can negatively affect engine operation and emissions performance.

To be able to detect a build-up of solids in the mix box 108 and the SCR 107 and prevent any negative effects of such clogging, the exhaust aftertreatment system 100 as disclosed herein is provided with a first pressure sensor 121 positioned at the exit of the exhaust manifold 103. The first pressure sensor 121 monitors the absolute value of the engine exhaust gas pressure $P_{121}$ including the soot and particulate matter load present in the exhaust.

A second sensor 122 in the form of a differential sensor is positioned across the DPF 106 and is responsible for measuring the difference (delta pressure) $\Delta P$, if any, between the two pressures at the entrance and exit of the DPF 106. The second sensor 122 has a first sensor part 122a positioned upstream the DPF 106 which measures the pressure $P_{122a}$ of the exhaust gas entering the DPF 106, and a second sensor part 122b positioned downstream of the DPF 106 at the exit of the DPF 106 which measures the pressure $P_{122b}$ of the exhaust gas exiting the DPF 106. Thus, the delta pressure $\Delta P$ is proportional to mass flow through the mix box and SCR 107 as well as any restriction inside the DPF 106 due to soot and ash that has accumulated over time.

A third pressure sensor 125 is positioned at the exit of the exhaust flow path 102 downstream of all exhaust aftertreatment devices. The third pressure sensor monitors the atmospheric pressure $P_{125}$ surrounding the aftertreatment system.

The exhaust system 1 comprising the exhaust aftertreatment system 100 as described herein may advantageously be used to detect a build-up of solids in the mix box 108 and/or SCR 107 occurring downstream the DPF 106.

The first pressure sensor 121 measures the total pressure $P_{121}$ of the exhaust gas and soot leaving the combustion engine 101. The second sensor 122 measures a second pressure $\Delta P$ across the DPF 106. The second pressure or delta pressure $\Delta P$ is obtained by subtracting the pressure $P_{122b}$ obtained by the second sensor part 122b positioned at the exit of the DPF 106 from the pressure $P_{122a}$ obtained by the first sensor part 122a positioned at the entrance of the DPF 106 as follows:

$$\Delta P = P_{122a} - P_{122b}$$

Under normal (unclogged) conditions, both the exhaust manifold pressure $P_{121}$ and delta pressure $\Delta P$ across the DPF 106 slowly increase at substantially the same rates since exhaust manifold pressure $P_{121}$ and delta pressure $\Delta P$ are equally affected by a soot level build-up in the DPF 106.

However, when solids start to collect and clog the mix box 108 and/or the SCR 107, the pressure $P_{122b}$ on the downstream side of the DPF 106 measured by the second sensor part 122b starts to increase, while the pressure $P_{122a}$ measured by the first sensor part 122a upstream of the DPF 106 is only slightly affected by the clogging. Due to the clogging downstream of the DPF 106, the second (delta) pressure $\Delta P$ measured across the DPF 106 by the differential pressure sensor 122 starts to decrease compared to the delta pressure measured at an unclogged condition. Meanwhile the pressure $P_{121}$ measured by the first sensor 121 at the exit of the engine manifold 103 reads the entire pressure restriction due to continued soot accumulation and build-up of solids, and therefore continues to rise. The decrease in the second pressure $\Delta P$ is solely due to a restriction in the flow downstream of the DPF 106 since a build-up due to soot and/or ash inside the DPF 106 will cause an increase in both $\Delta P$ and $P_{121}$.

A mathematical flow model based on pressure $P_{121}$ at the first pressure sensor 121, mass flow through the exhaust aftertreatment system, temperature, estimated soot load and normal flow resistance across the SCR 107 to estimate the expected delta pressure $\Delta P$ across the DPF 106 at unclogged conditions has been developed which sets a modelled delta pressure value $\Delta P_{model}$ to which the actual second (delta) pressure $\Delta P$ measured by the second sensor 122 during operation of the exhaust aftertreatment system 100 can be compared: When the second pressure $\Delta P$ actually measured by the second sensor 122 starts to deviate from the modelled pressure value $\Delta P_{model}$, there is an indication of a restriction of the exhaust flow downstream of the DPF 106.

Model Background

In the following, the mix box and/or SCR restriction is modelled as a valve whose flow coefficient $K_{mix\ box}$ will change as solid deposits grow, making the cross-sectional area inside the mix box 108 and/or SCR 107 smaller. Although there is no valve in the system, the restriction inside the mix-box 108 and/or SCR 107 may be thought of as a valve which slowly closes as the restriction increases due to build-up of deposits inside the mix box 108 and/or SCR 107.

The valve flow model is assumed to be of incompressible fluid or gas in a non-chocked condition, and therefore the volumetric flow can be estimated by

$$Q = \frac{K_v}{\sqrt{\rho/1000\Delta p}}$$

where

$K_v$ is the flow coefficient of the specific valve
$\rho$ is the gas density
$\Delta p$ is pressure drop $p_{in}$ - $p_{out}$ in bar
Substituting

$$Q = \frac{\dot{m}}{\rho}$$ where $\dot{m}$ is the flow rate in kg/h

$$\rho = \frac{10^5 p_{in}}{RT}$$ where R is the gas constant and T is the temperature in K

Solving for $p_{in}$

$$p_{in} = \frac{1}{2}\left( p_{out} \mp \sqrt{p_{out}^2 + \frac{4RT\dot{m}^2}{10^8 K_v^2}} \right)$$

Assuming that $p_{in} \geq p_{out}$ and replacing $\dot{m}$ by its kg/s equivalent

$$p_{in} = \frac{1}{2}\left( p_{out} + \sqrt{p_{out}^2 + \frac{4RT\dot{m}^2 3600^2}{10^8 K_v^2}} \right)$$

The calculation of $\frac{3600^2 4R}{10^8}$ where R = 287 can be simplified as C = 148.7808 which gives

$$p_{in} = \frac{1}{2}\left( p_{out} + \sqrt{p_{out}^2 + \frac{CT\dot{m}^2}{K_v^2}} \right)$$

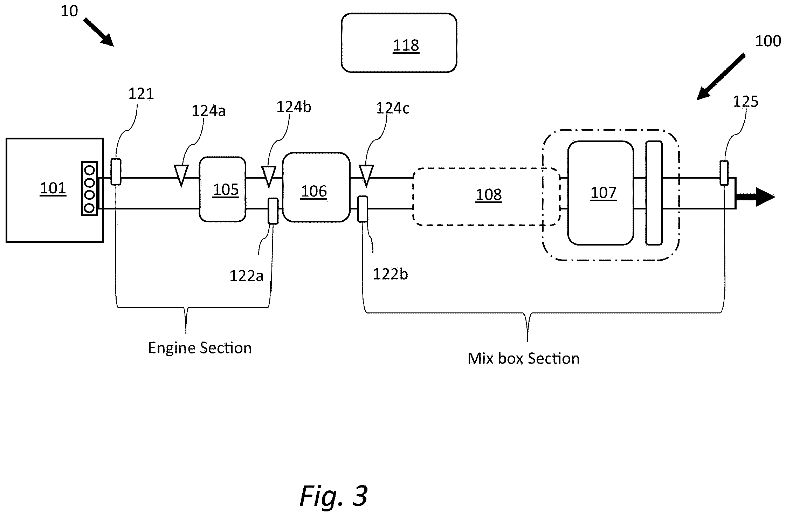

In Fig. 3 the exhaust aftertreatment system 100 has been divided into two sections: the "Engine section" and the "Mix box section" that can be used to simplify the equation above

$$P_{122a} = \frac{1}{2}\left( P_{125} + \sqrt{P_{125}^2 + \frac{CT_{124c}\dot{m}^2}{K_{mix\,box}^2}} \right)$$

where $P_{122b}$ is the pressure measured by the second part of the second sensor 122, $P_{125}$ is the atmospheric pressure measured by the third sensor 125, $T_{214c}$ is the temperature measured in ° Kelvin by the third temperature sensor located at the exit of the DPF 106, and $K_{mix\,box}$ is the flow coefficient of the Mix box section.

$$P_{121} = \frac{1}{2}\left(P_{122a} + \sqrt{P_{122a}{}^2 + \frac{CT_{124a}\dot{m}^2}{K_{engine}^2}}\right)$$

where $P_{121}$ is the pressure measured at the exit of the manifold 103, $P_{122a}$ is the pressure measured by the first part of the second sensor 122, $T_{124a}$ is the temperature measured in ° Kelvin by the first temperature sensor 124 located upstream of the DOC 105, and $K_{Engine}$ is the flow coefficient through the Engine section.

$K_{mix\ box}$ and $K_{Engine}$ measure mass per unit time at a certain temperature of a gas flowing in the Mix box and Engine sections respectively. As the mix box 108 and/or SCR 107 become clogged, the flow coefficient $K_{mix\ box}$ through the Mix box section decreases. The flow coefficient $K_{mix\ box}$ is proportional to the cross-sectional area in the mix box 108 and/or SCR 107 and is therefore an indication of the amount of built-up solids inside the mix box 108 and/or SCR 107.

$$P_{122a} - P_{122b} = \Delta P$$

For the mathematical model, the flow coefficient $K_{Engine}$ for the Engine section is fixed, and values for $K_{mix\ box}$ are obtained in an unclogged system. The model will generate a modelled pressure $\Delta P_{model}$ during unclogged conditions to which the second pressure $\Delta P$ measured across the DPF 106 can be compared during operation of the engine 101. When the second pressure $\Delta P$ across the DPF during operation of the engine starts to deviate from the modelled pressure value $\Delta P_{model}$, the current flow coefficient $K_{mix\ box}$ through the Mix box section can be estimated and an approximate restriction due to solid deposits in the mix box can be predicted. When a certain threshold set by the system has been reached a signal is sent to the EAC and the user of the vehicle is alarmed.

Example 1

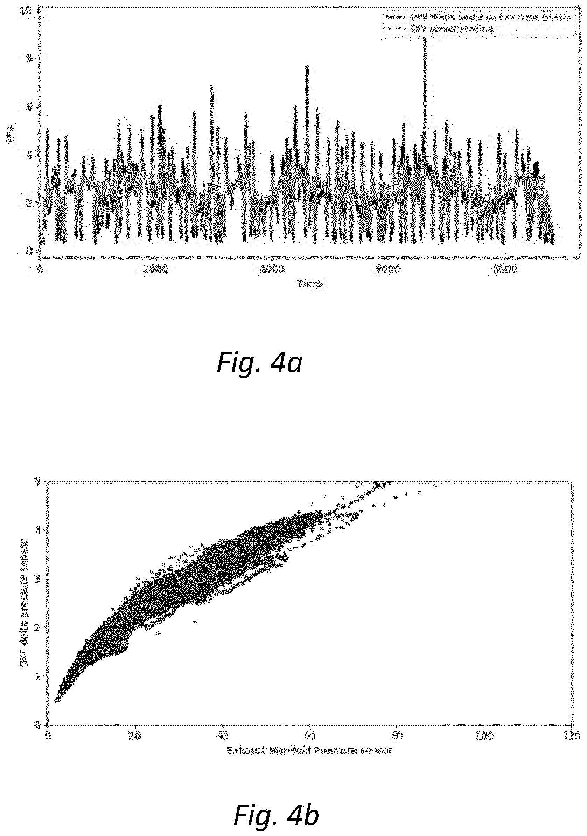

Fig. 4a is a graph disclosing modelled pressure $\Delta P_{model}$ by a solid black line together with actual second pressure $\Delta P$ measured by the second sensor 122 (hatched light grey line) during operation of an engine 101 at unclogged conditions. Figure 4b discloses a scatter plot wherein the exhaust pressure $P_{121}$ measured by the first sensor 121 at the manifold exit is plotted against the second pressure $\Delta P$ measured by the second sensor 122 during operation of an engine 101 at unclogged conditions. It is seen in Fig. 4a that in an unclogged system the modelled pressure $\Delta P_{model}$ and second pressure $\Delta P$ follow each other, i.e., when $\Delta P_{model}$ increases the $\Delta P$ increases at the same rate and when $\Delta P_{model}$ decreases $\Delta P$ follows.

Example 2

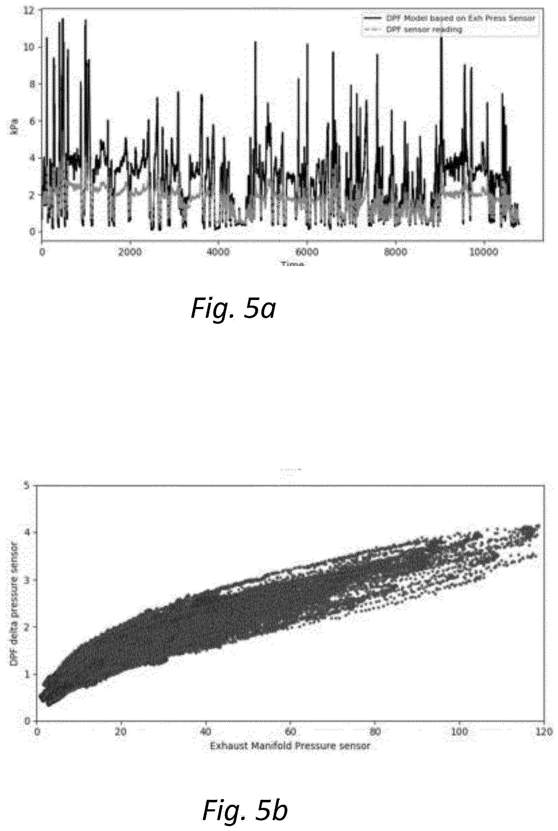

Figures 5a and 5b disclose similar graphs as in Figures 4a and 4b, but in this example the flow through the mix box 108 and/or SCR 107 has been restricted due to a build-up of solids. It is seen in Fig. 5a that when solids have clogged the mix box 108 and/or SCR 107, the second pressure $\Delta P$ across the DPF 106 decreases compared to the modelled pressure $\Delta P_{model}$. This is confirmed by the scatter plot in Fig. 5b which clearly illustrates that the second pressure $\Delta P$ measured across the FPF 106 by the second sensor 122 has decreased while the exhaust pressure $P_{121}$ measured by the first sensor 121 increases.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

**Claims**

1. A method for detecting a flow restriction in an exhaust system (10) due to solid deposits formed in a portion of an exhaust flow path (102), the portion of exhaust flow path comprising at least a mix box (108) - selective catalytic reducer (107) of the exhaust system (10), the exhaust system (10) comprising an exhaust aftertreatment system (100) being located downstream of a combustion engine (101) in an exhaust flow path (102), the exhaust aftertreatment system (100) comprising

   - a diesel oxidation catalyst (105) receiving exhaust gas from the combustion engine (101); and
   - a diesel particulate filter (106) positioned downstream of the diesel oxidation catalyst (105); and
   - a selective catalytic reducer (107) positioned downstream of the diesel particulate filter (106) in the exhaust flow path (102); and
   - a first pressure sensor (121) positioned downstream an exit of a exhaust manifold (103) in the combustion engine (101) configured to monitor a first pressure ($P_{121}$) of the exhaust gas at the exit of the exhaust manifold (103); and
   - a second pressure sensor (122) arranged across the diesel particulate filter (106) configured to monitor a second pressure ($\Delta P$) across the diesel particulate filter (106); wherein the method comprises
   - the first pressure sensor (121) monitoring a first pressure of the exhaust gas at the exit of the exhaust manifold (103) and generating a first pressure value ($P_{121}$); and
   - the second pressure sensor (122) monitoring a second pressure across the diesel particulate filter (106) and providing a second pressure value ($\Delta P$; and
   - using a modelled value ($\Delta P_{model}$) of the second pressure to estimate an expected second pressure ($\Delta P$) across the diesel particulate filter (106) at unrestricted conditions, the modelled pressure value ($\Delta P_{model}$) being modelled with respect to the first pressure value ($P_{121}$), an exhaust mass flow ($\dot{m}$), a first and a second temperature ($T_{124a}$, $T_{124c}$), an estimated restriction load and a normal flow resistance across the mix box (108) and/or selective catalytic reducer (107);
   - computing an estimated flow coefficient ($K_{mix\_box}$) for the exhaust flow (102) through the mix box (108) and/or selective catalytic reducer (107) when the second pressure value ($\Delta P$) across the diesel particulate filter (106) during operation starts deviating from the modelled pressure value ($\Delta P_{model}$), and provide an approximate flow restriction in the mix box (108) and/or selective catalytic reducer (107);
   - if a change in the second pressure ($\Delta P$) monitored by the second pressure sensor (122) is changing at substantially same rate as the modelled pressure value ($\Delta P_{model}$), no restriction in the flow due to solid deposits in in the mix box (108) and/or selective catalytic reducer (107) is present; and
   - if a change in the second pressure ($\Delta P$) monitored by the second sensor is decreasing compared to a change in the modelled pressure value ($\Delta P_{model}$), a flow restriction due to deposits in the mix box (108) and/or selective catalytic reducer (107) is present; and a notification signal is generated.

2. The method of claim 1, wherein the flow coefficient ($K_{mix\ box}$) is proportional to a cross-sectional area in the mix box (108), indicating an amount of built-up solids inside the mix box (108).

3. The method according to claim 2, wherein the second pressure sensor (122) is a differential pressure sensor comprising

   - a first sensor part (122a) positioned at an entrance of the diesel particulate filter (106) and configured to measure

a pressure ($P_{122a}$) of the exhaust gas entering the diesel particulate filter (106); and
- a second sensor part (122b) positioned at an exit of the diesel particulate filter (106) and configured to measure a pressure ($P_{122b}$) of the exhaust gas exiting the diesel particulate filter (106);
- the second sensor (122) being configured to output $\Delta P = P_{122a} - P_{122b}$.

4. The method according to any one of the preceding claims, wherein the exhaust system (10) further comprises an ammonia slip catalyst (109) arranged downstream of the selective catalytic reducer (107), said ammonia slip catalyst (109) is configured to oxidize ammonia to nitrogen gas and water.

5. The method according to any one of the preceding claims, wherein the exhaust system (10) further comprises an aftertreatment hydrocarbon injector (114) configured to inject hydrocarbons into the exhaust flow path (102) upstream of the diesel oxidation catalyst (105).

6. The method according to any one of the preceding claims, wherein the exhaust system (10) further comprises a urea dosing system (111) configured to inject diesel exhaust fluid into the exhaust flow path (102) upstream of the selective catalytic reducer (107).

7. The method according to claim 6, wherein the urea dosing system (111) is configured to inject diesel exhaust fluid into a mix-box (108) arranged upstream of the selective catalytic reducer (107).

8. An exhaust system (10) for treating exhaust gas of a combustion engine (101), the exhaust system (10) comprising an exhaust aftertreatment system (100) being located downstream of a combustion engine (101) in an exhaust flow path (102), the exhaust aftertreatment system (100) comprising

   - a diesel oxidation catalyst (105) receiving exhaust gas from the combustion engine (101); and
   - a diesel particulate filter (106) positioned downstream of the diesel oxidation catalyst (105) in the exhaust flow path (102); and
   - a selective catalytic reducer (107) positioned downstream of the diesel particulate filter (106) in the exhaust flow path (102); and
   - a first pressure sensor (121) positioned at an exit of an exhaust manifold (103) from the combustion engine (101) configured to monitor a first pressure ($P_{121}$) of the exhaust gas at the exit of the exhaust manifold (103); and
   - a second pressure sensor (122) for monitoring a second pressure ($\Delta P$) across the diesel particulate filter (106), the second sensor (122) being configured to output $\Delta P = P_{122a} - P_{122b}$.

9. The exhaust system (10) according to claim 8, wherein the second pressure sensor (122) comprises first sensor part (122a) positioned at an entrance of the diesel particulate filter (106) and configured to measure a pressure ($P_{122a}$) of the exhaust gas entering the diesel particulate filter (106), and a second sensor part (122b) positioned at an exit of the diesel particulate filter (106) and configured to measure a pressure ($P_{122b}$) of the exhaust gas exiting the diesel particulate filter (106), .

10. The exhaust system (10) according to claims 8 and 9, further comprising an ammonia slip catalyst (109) arranged downstream of the selective catalytic reducer (107) and configured to oxidize ammonia to nitrogen gas and water.

11. The exhaust system (10) according to any one of the preceding claims 8-10, further comprising an aftertreatment hydrocarbon injector (114) configured to inject hydrocarbons into the exhaust flow path (102) upstream of the diesel oxidation catalyst (105).

12. The exhaust system (10) according to any one of the preceding claims 8-11, further comprising a urea dosing system (111) configured for injecting diesel exhaust fluid (DEF) into the exhaust flow path (102) upstream of the selective catalytic reducer (107).

13. The exhaust system (10) according to claim 12, wherein the urea dosing system (111) is configured to inject diesel exhaust fluid (DEF) into a mix-box (108) arranged upstream of the selective catalytic reducer (107).

14. An electronic aftertreatment controller (118) configured to detect a flow restriction in an exhaust system (10) due to solid deposits formed in a portion of an exhaust flow path (102), the portion of exhaust flow path comprising at least a mix box (108) - selective catalytic reducer (107) of the exhaust system (10), the electronic aftertreatment controller (118) comprising

- a microprocessor;

- a memory;

the exhaust system (10) comprising an exhaust aftertreatment system (100) being located downstream of a combustion engine (101) in the exhaust flow path (102), the exhaust aftertreatment system (100) comprising

- a diesel oxidation catalyst (105) receiving exhaust gas from the combustion engine (100); and

- a diesel particulate filter (106) positioned downstream of the diesel oxidation catalyst (105); and

- a selective catalytic reducer (107) positioned downstream of the diesel particulate filter (106) in the exhaust flow path (102); and

- a first pressure sensor (121) positioned downstream an exit of an exhaust manifold (103) in the combustion engine (101) configured to monitor a first pressure value ($P_{121}$) of the exhaust gas at the exit of the exhaust manifold (103); and

- a second pressure sensor (122) arranged across the diesel particulate filter (106) configured to monitor a second pressure value ($\Delta P$) across the diesel particulate filter (106);

**characterized in that** the controller is configured to;

- receive a first pressure value ($P_{121}$) from the first pressure sensor (121) monitoring a first pressure of the exhaust gas at the exit of the exhaust manifold (103); and

- providing a second pressure value ($\Delta P$) from the second pressure sensor (122) monitoring a second pressure across the diesel particulate filter (106); and

- generate a modelled value ($\Delta P_{model}$) of the second pressure to estimate an expected second pressure ($\Delta P$) across the diesel particulate filter (106) at unrestricted conditions, the modelled pressure value ($\Delta P_{model}$) being modelled with respect to the first pressure value ($P_{121}$), an exhaust mass flow ($\dot{m}$) a first and a second temperature ($T_{124a}$, $T_{124c}$), an estimated restriction load and a normal flow resistance across the mix box (108) and/or selective catalytic reducer (107); and

- compute an estimated flow coefficient ($K_{mix\_box}$) for the exhaust flow (102) through the mix box (108) and/or selective catalytic reducer (107) when the second pressure value ($\Delta P$) across the diesel particulate filter (106) during operation starts deviating from the modelled pressure value ($\Delta P_{model}$) and provide an approximate restriction in the mix box (108) and/or selective catalytic reducer (107);

- monitor if a change in the second pressure ($\Delta P$) monitored by the second pressure sensor (122) is changing at substantially same rate as the modelled pressure value ($\Delta P_{model}$), no restriction in the flow due to deposits in the mix box (108) and/or selective catalytic reducer (107) is present;

- monitor if a change of the second pressure ($\Delta P$) monitored by the second sensor (122) is decreasing compared to a change in the modelled pressure value ($\Delta P_{model}$), a flow restriction due to deposits in the portion of exhaust flow path is present; and generate a notification signal.

15. A vehicle (1) comprising the exhaust system (10) of claims 8-13 and the electronic aftertreatment controller (118) of claim 14.

Fig. 1

Fig. 2

*Fig. 3*

*Fig. 4a*

*Fig. 4b*

*Fig. 5a*

*Fig. 5b*

# EP 4 467 784 A1

Europäisches
Patentamt

European
Patent Office

Office européen
des brevets

# EUROPEAN SEARCH REPORT

Application Number

EP 23 17 4638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 102 036 A1 (VOLKSWAGEN AG [DE]) 14 December 2022 (2022-12-14) * paragraph [0003]; claims 1-8; figure 1 * ----- | 1-15 | INV. F01N9/00 F01N11/00 |
| X | KR 101 749 127 B1 (KOREA ENERGY RESEARCH INST [KR]) 22 June 2017 (2017-06-22) * claim 1; figure 1 * ----- | 1-15 | |

TECHNICAL FIELDS
SEARCHED      (IPC)

F01N

The present search report has been drawn up for all claims

| Place of search | Date of completion of the search | Examiner |
|---|---|---|
| Munich | 4 October 2023 | Seifert, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................

& : member of the same patent family, corresponding
    document

EPO FORM 1503 03.82 (P04C01)

19

## ANNEX TO THE EUROPEAN SEARCH REPORT
## ON EUROPEAN PATENT APPLICATION NO.

EP 23 17 4638

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2023

| Patent document cited in search report | | Publication date | Patent family member(s) | | Publication date |
|---|---|---|---|---|---|
| EP 4102036 | A1 | 14-12-2022 | CN | 115467730 A | 13-12-2022 |
| | | | DE | 102021115045 A1 | 15-12-2022 |
| | | | EP | 4102036 A1 | 14-12-2022 |
| KR 101749127 | B1 | 22-06-2017 | CN | 107100700 A | 29-08-2017 |
| | | | KR | 101749127 B1 | 22-06-2017 |

EPO FORM P0459

For more details about this annex : see Official Journal of the European Patent Office, No. 12/82